# EUROPÄISCHE PATENTSCHRIFT

(11) **EP 1 535 685 B1**
(45) Veröffentlichungstag und Bekanntmachung des Hinweises auf die Patenterteilung: **03.06.2009**
(21) Anmeldenummer: 04090416.1
(22) Anmeldetag: 01.11.2004
(51) Int. Cl.: B23H 7/26, B23H 7/28, B23H 7/38

(54) **Vorrichtung zur präzisen elektrochemischen Bearbeitung**
Device for high precision electrochemical machining
Dispositif pour usinage de précision par électrochimie

(30) Priorität: 25.11.2003 DE 10355875
(43) Veröffentlichungstag der Anmeldung: 01.06.2005
(73) Patentinhaber: Rolls-Royce Deutschland Ltd & Co KG, 15827 Dahlewitz (DE)
(72) Erfinder: Mielke, Rainer, 61440 Oberursel (DE)
(74) Vertreter: Wablat, Wolfgang

(56) Entgegenhaltungen:
- EP-A- 1 097 774
- US-A- 4 430 544

## Beschreibung

Die Erfindung betrifft eine Vorrichtung zur präzisen elektrochemischen Bearbeitung von metallischen Werkstücken, die einen Werkzeugträger für eine Elektrode, einen mit dem Werkzeugträger verbundenen Schwingungsantriebsmechanismus zur Erzeugung einer Schwingungsbewegung der Elektrode in der Bearbeitungsrichtung und ein eine kontinuierliche Linearbewegung ausführendes Vorschubteil, in dem der Werkzeugträger angeordnet und durch Führungsmittel beweglich gehalten ist, aufweist.

Beim elektrochemischen Abtragen, das auf dem Prinzip der elektrochemischen Zelle beruht, strömt in dem kleinen Spalt zwischen dem zu bearbeitenden Werkstück (Anode) und der an einem Werkzeugträger gehaltenen Elektrode (Kathode) eine Elektrolytlösung. An der Kathode werden Wasserstoffionen entladen, während Metallionen an der Anode mit OH-Ionen des Wassers unter Bildung von Metallhydroxidverbindungen reagieren, die sich als Schlamm absetzen. Während des allmählichen Vorschubs des Werkszeugträgers wird das Metall elektrochemisch abgetragen. Sofern die Elektrode zusätzlich zu der Vorschubbewegung auch noch eine Schwingungsbewegung durchführt, wobei jeweils zum Zeitpunkt des geringsten Abstandes ein Spannungsimpuls erzeugt wird, kann - jedoch bei verringerter Abtragsrate - die Genauigkeit der Metallbearbeitung noch wesentlich verbessert werden. Eine Schwierigkeit bei der präzisen elektrochemischen Bearbeitung mit schwingender Elektrode besteht jedoch in der Gewährleistung einer ausschließlich linearen Schwingbewegung der Elektrode, das heißt, ohne oder mit einem möglichst geringen seitlichen Spiel.

Bei einer aus der EP 1097774 A1 bekannten Vorrichtung zur präzisen elektrochemischen Bearbeitung von Metallen wird die Linearschwingung der Elektrode mit einem Exzenterantrieb bewirkt, bei dem die Kurbelwelle eines Elektromotors über eine Pleuelstange mit dem Werkzeugträger verbunden ist. Der Werkzeugträger ist mittels zweier Membranen jeweils an der oberen und unteren Seite in einem die Vorschubbewegung ausführenden Vorschubteil (Pinole) gehalten. Diese Lagerung erlaubt eine lineare Schwingbewegung des Werkzeugträgers in der Pinole. Aufgrund einer seitlichen Bewegungskomponente der Pleuelspitze ist eine seitlich vollständig spielfreie Führung des Werkzeugträgers trotz der Membranlagerung nicht möglich. Die mit dieser Lagerung erzielbare Genauigkeit von 0,05 mm in horizontaler Ebene ist in vielen Anwendungsfällen, zum Beispiel bei der Herstellung von BLISK-Schaufeln für Flugzeugturbinen, nicht ausreichend. Auch die in Bearbeitungsrichtung erzielbare Genauigkeit von 0.03 mm genügt den an eine präzise Bearbeitung gestellten Anforderungen nicht. Die in der EP 1097774 A1 beschriebene Vorrichtung ist weiterhin insofern nachteilig, als sie aufgrund der nicht spielfreien Lagerung der Pleuelstange an der Kurbelwelle nur in senkrechter Richtung angeordnet werden und arbeiten kann. Zudem kann diese Vorrichtung nicht in dem zwar weniger präzisen, aber dafür mit höherer Materialabtragsrate arbeitenden Abtragsverfahren nicht mit ausreichender Genauigkeit arbeiten, da die jeweilige Position des Pleuels bzw. der Elektrode nicht ermittelt bzw. eingestellt werden kann und die Elektrode auch nicht fest steht. Ein weiteres Problem bei den bekannten Vorrichtungen zum elektrochemischen Abtragen besteht in der Abdichtung des Schwingungsmechanismus gegenüber dem aggressiv wirkenden Elektrolyten.

Der Erfindung liegt die Aufgabe zugrunde, eine Vorrichtung zur elektrochemischen Metallbearbeitung der eingangs genannten Art zu entwickeln, die mit geringem Spiel in seitlicher und in Bearbeitungsrichtung sowie in unterschiedlicher Ausrichtung mit hoher Präzision betrieben werden kann.

Erfindungsgemäß wird die Aufgabe mit einer gemäß den Merkmalen des Patentanspruchs 1 ausgebildeten Vorrichtung zur elektrochemischen Bearbeitung gelöst. Aus den Unteransprüchen ergeben sich weitere Merkmale und vorteilhafte Weiterbildungen der Erfindung.

Nach einem ersten wichtigen Erfindungsmerkmal ist der langgestreckt ausgebildete Werkzeugträger in einem mehrere Kammern bildenden Gehäuse angeordnet, das auf der Elektrolytseite abdichtend von dem Werkzeugträger durchdrungen ist. Als Führungsmittel für die lineare Schwingbewegung sind in dem Gehäuse gekühlte und geschmierte Gleitlager aus einem quellfähigen Material angeordnet, die jeweils aus einer diesen zugeordneten Flüssigkeitskammer mit der Quell-, Kühl- und Schmierflüssigkeit versorgt werden. Die lineare Schwingbewegung der mit dem Werkzeugträger verbundenen Elektrode wird durch einen senkrecht zur Längsachse des Werkzeugträgers angeordneten, das Gehäuse durchgreifenden Schwinghebel erzeugt der mit dem Werkzeugträger in Eingriff steht und außerhalb des Gehäuses an einem Ende fest eingespannt ist und am anderen Ende mit einem Exzenterantrieb verbunden ist.

Auf diese Weise kann sowohl das seitliche Spiel der Elektrode als auch deren durch die Antriebs- und Antriebsübertragungsmittel bedingtes Spiel in der Bearbeitungsrichtung gegenüber den bekannten Lösungen deutlich verringert und folglich die Bearbeitungsgenauigkeit wesentlich erhöht werden. Die Vorrichtung kann nicht nur vertikal, sondern in jeder anderen Ausrichtung betrieben werden.

Gemäß einem weiteren wichtigen Erfindungsmerkmal kann die Elektrode unter Verwendung einer Messeinrichtung und eines dem Schwingungsantrieb zugeordneten Fequenzumrichters genau in ihre obere Totpunktlage und damit auch in die spielfreie obere Totpunktlage des Antriebsorgans gebracht werden und dort mit einem auf den Werkzeugträger wirkenden Befestigungsmittel arretiert werden. Dadurch ist es möglich, dieselbe Vorrichtung auch in dem weniger präzisen, aber effektiveren Betrieb mit nicht pulsierende Elektrode mit hoher Genauigkeit zu betreiben.

Nach einem weiteren wichtigen Merkmal der Erfindung ist in dem zum Elektrolyten weisenden unteren Abschnitt des Gehäuses, wo der Werkzeugträger die Bodenwand des Gehäuses durchdringt, eine weitere Flüssigkeitskammer vorgesehen. Diese Flüssigkeitskammer ist mit einem Sensor, vorzugsweise einem Leitfähigkeitsmesssensor, ausgerüstet, um das Eindringen von Elektrolyt in das Gehäuse aufgrund einer defekten Dichtung an der Austrittsstelle des Werkzeugträgers in den Elektrolyten sofort feststellen zu können.

In Ausgestaltung der Erfindung sind die Flüssigkeitskammern in dem Gehäuse durch Querwände mit abgedichteten Durchgangsöffnungen für den Werkzeugträger begrenzt. Die Gleitlager sind aus hygroskopischem, quellfähigem Material bestehende Lagerbuchsen, die in den Durchgangsöffnungen angebracht sind und am Innenumfang Spiralnuten für einen Flüssigkeitsstrom aus den Flüssigkeitskammern aufweisen.

In weiterer Ausbildung der Erfindung ist an dem Gehäuse im Abstand zum Schwinghebel eine Traverse angebracht, die an einem Ende die fest eingespannte Seite des Schwinghebels hält und am anderen Ende zum Massenausgleich federnd mit dem Schwinghebel verbunden ist. Zwischen dem Schwinghebel und der Traverse ist die - vorzugsweise piezoelektrische - Messeinrichtung zur genauen Feststellung der Lage des Schwinghebels und damit der Elektrode angeordnet.

Mit dem Schwinghebel, der in der Nähe seines Einspannendes einen elastischen Bereich aufweist, steht der Werkzeugträger über ballig ausgebildete Lagerplatten in Wirkverbindung.

In weiterer Ausbildung der Erfindung wird der Antriebsmotor zur Regelung der Schwingungsfrequenz und zur Synchronisation der Vorrichtung mit anderen Schwingungserzeugern über einen Frequenzumrichter betrieben. Dadurch ist es insbesondere möglich, die Vorrichtung außerhalb der Resonanzfrequenz der zu bearbeitenden Bauteile zu betreiben.

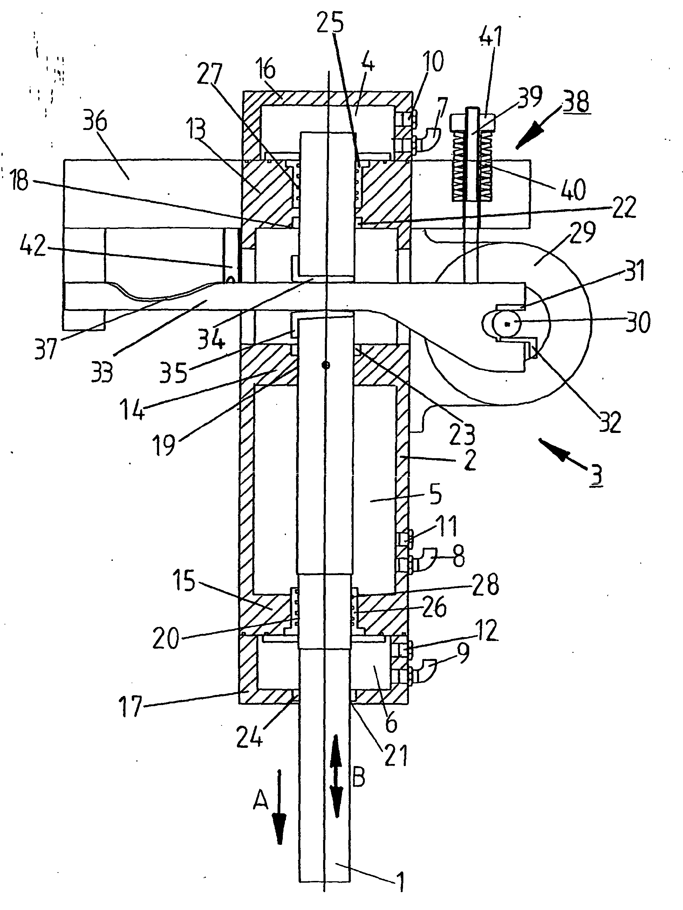

Ein Ausführungsbeispiel der Erfindung wird anhand der Zeichnung, in deren einziger Figur eine Teilansicht einer Vorrichtung zur elektrochemischen Metallbearbeitung mit einem Werkzeugträger und den zugehörigen Antriebs- und Führungsmitteln für dessen geradlinig schwingende Bewegung dargestellt ist, näher erläutert.

Kernstück der elektrochemischen Abtragsvorrichtung ist, wie in der Zeichnung gezeigt, der in Bearbeitungsrichtung (Vorschubrichtung gemäß Pfeil A) gemäß dem Pfeil B schwingend bewegliche Werkzeugträger 1, an dessen freier (in der Zeichnung unterer) Stirnseite die Elektrode zur Bearbeitung des betreffenden Werkstücks (jeweils nicht dargestellt) angebracht wird. Der Werkzeugträger 1 ist in einem Gehäuse 2 beweglich gelagert. An dem Gehäuse 2 ist ein mit dem Werkzeugträger 1 in Wirkverbindung stehender Antriebsmechanismus 3 zur Erzeugung der linearen Schwingungsbewegung des Werkzeugträgers 1 angebracht. Das Gehäuse 2 samt Werkzeugträger 1 und Antriebsmechanismus 3 ist zudem mit Hilfe eines weiteren Antriebs (nicht dargestellt) in der Bearbeitungsrichtung (Pfeil B) bewegbar. Das Gehäuse 2 ist in drei mit destilliertem Wasser gefüllte (erste bis dritte) Flüssigkeitskammern 4, 5 und 6 unterteilt, deren Befüllung über Einlassöffnungen 7, 8 und 9 erfolgt. Zur Kontrolle des Füllstands in den Flüssigkeitskammern 4 und 5 sind in der Gehäusewand Sensoren oder Schaugläser 10 und 11 vorgesehen, während in der in Bearbeitungsrichtung unteren Flüssigkeitskammer 6 ein Leitfähigkeitsmesssensor 12 angeordnet ist. Die Flüssigkeitskammern 4, 5 und 6 sind jeweils durch erste bis dritte Querwände 13, 14 und 15 bzw. eine Deckwand 16 und eine Bodenwand 17 gegeneinander bzw. nach außen verschlossen. Die Querwände 13 bis 15 und die Bodenwand 17 weisen abgedichtete erste bis vierte Durchgangsöffnungen 18, 19, 20 und 21 auf. Die Abdichtung in der ersten, zweiten und vierten Durchgangsöffnung 18, 19 und 21 erfolgt mit Dichtungen 22, 23 und 24. In der ersten und dritten Durchgangsöffnung 18 und 20 der ersten und dritten Querwand 13 und 15 sind Lagerbuchsen 25 und 26 angeordnet, die aus einem hygroskopischen Lagerwerkstoff bestehen und an der inneren Umfangsfläche eine spiralförmig verlaufende Nut 27, 28 aufweisen.

Die Ausbildung des Gehäuses 2 mit Flüssigkeitskammern 4 bis 6 und Lagerbuchsen 25, 26 aus hygroskopischem Material hat folgende Funktion: Der Werkzeugträger 1 ist in den Lagerbuchsen 25, 25 gelagert und wird bei seiner Schwingbewegung durch das aus der ersten Flüssigkeitskammer 4 bzw. der zweiten Flüssigkeitskammer 5 in die Spiralnuten 27, 28 gelangende Wasser geschmiert und gekühlt. Eine wesentliche Funktion des Wassers besteht darin, dass der Kunststoff (z.B. PTFE) der Lagerbuchsen 25, 26 durch das Wasser aufquillt und somit das seitliche Spiel des Werkzeugträgers 1 auf ein Minimum begrenzt. Die Bearbeitungsgenauigkeit bzw. die maximale Abweichung in der Horizontalen ist bei dieser Art der Lagerung des Werkzeugträgers 1/100 mm und weniger.

Die dritte Flüssigkeitskammer 6, die ebenfalls mit Wasser gefüllt ist, dient insofern der Abdichtung der Lagerbuchsen 25, 26 und des Schwingungsantriebsmechanismus 3 gegenüber dem Elektrolyten, als gegebenenfalls über die vierte Durchgangsöffnung 21 in der Bodenwand 17 eindringender Elektrolyt zum einen verdünnt wird und zum anderen mit Hilfe des Leitfähigkeitsmesssensors 12 das Eindringen von Elektrolyt in die dritte Flüssigkeitskammer 6 sofort angezeigt wird. Das Vermeiden des Eindringens von Elektrolyt ist von besonderer Bedeutung, als beispielsweise bei der elektrochemischen Bearbeitung von Turbinenschaufeln aus Titan der Elektrolyt aus einer NaCl-Lösung besteht und bei der Metallbearbeitung entstehende Salzsäure die aus Kunststoff bestehenden Lagerbuchsen 25, 26 beschädigt werden können.

Wie erwähnt, hat auch das Spiel des Antriebsmotors und der Kraftübertragungselemente zur Erzeugung der Schwingbewegung des Werkzeugträgers einen negativen Einfluss auf die Bearbeitungsgenauigkeit in Bearbeitungsrichtung. Zur Verringerung dieses Spiels und zur Verbesserung der Bearbeitungsgenauigkeit in Längsrichtung umfasst der Schwingungsantriebsmechanismus 3 einen an der Außenwand des Gehäuses 2 angeflanschten Antriebsmotor 29 mit einem Exzenter 30, an dem mittels einer ersten Lagerplatte 31 und einer keilförmigen zweiten Lagerplatte 32 ein senkrecht zur Bewegungsrichtung des Werkzeugträgers 1 angeordneter Schwinghebel 33 spielfrei gehalten ist. Der Schwinghebel 33 ist über Öffnungen in den Längswänden des Gehäuses 2 zwischen der ersten und der zweiten Querwand 13, 14 durch das Gehäuse 2 hindurchgeführt. Er steht an seinen in Bearbeitungsrichtung gegenüberliegenden Seitenflächen, und zwar in der Mitte des Schwinghebels 33, über eine ballig ausgeführte dritte Lagerplatte 34 und eine ballig und keilförmig ausgeführte vierte Lagerplatte 35 spielfrei mit dem Werkzeugträger 1 in Wirkverbindung. Das freie Ende des Schwinghebels 33 ist fest mit einer parallel und im Abstand zu diesem an dem Gehäuse 2 befestigten Traverse 36 verbunden. Der Schwinghebel 33 weist auf seiner Einspannseite an der Traverse einen durch eine gewölbte Materialschwächung spannungs- und schwingungsmäßig optimierten, elastisch federnd ausgebildeten Bereich 37 auf, um die auf den Schwinghebel aufgebrachte Biegespannung zu kompensieren. Der elastische Bereich 37 ist zur Lebensdauererhöhung zudem mittels Kugelstrahlen behandelt, wodurch Druckeigenspannungen in die Oberfläche eingebracht werden. Aufgrund der zu den Seitenflächen des Schwinghebels 33 ballig ausgebildeten Lagerplatten 34, 35 wird das Verbiegen des Schwinghebels 33 nicht auf den Werkzeugträger 1 übertragen, so dass dieser nicht seitlich ausgelenkt wird. Mit den zuvor geschilderten Maßnahmen kann das durch den Antriebsmotor 29 bedingte Spiel in der Bearbeitungsrichtung (Längsrichtung des Werkzeugträgers 1) auf einen Wert kleiner als 1/100 mm vermindert werden, wodurch eine hohe Bearbeitungsgenauigkeit erreicht wird.

An der Traverse 36 ist ein einstellbares Masseausgleichselement 38, bestehend aus einer mit dem Schwinghebel 33 verbundenen Zugstange 39, einer Druckfeder 40 und einer Stellmutter 41, angebracht. Dadurch können zur Verschleißminderung an den bewegten Bauteilen große Elektrodengewichte teilweise ausgeglichen. Außerdem ist es möglich, zur Verdopplung der Schwingungsfrequenz einen Doppelexzenter (nicht dargestellt) zu verwenden, da das Masseausgleichselement 38 auch das Spiel des Doppelexzenters ausgleichen kann.

Die Vorrichtung weist außerdem eine zwischen der Traverse 36 und dem Schwinghebel 33 angeordnete piezoelektrische Messeinrichtung 42 auf, mit der festgestellt werden kann, an welcher Stelle sich der Schwinghebel 33 und damit der Werkzeugträger und die Elektrode in der Ruhelage befinden. Durch Ansteuerung des Antriebsmotors 29 über einen Frequenzumrichter (nicht dargestellt) kann der Schwinghebel 33 - und damit die Elektrode - mit Hilfe der Messeinrichtung 42 in eine definierte Lage gebracht werden. Die genaue Bestimmung der Elektrodenposition mit der Messeinrichtung 42 und die Fixierung dieser Position machen es möglich, die elektrochemische Bearbeitung auch in dem leistungsfähigeren schwingungsfreien, aber weniger präzisen Betrieb durchzuführen. Der Werkzeugträger 1 wird in diesem Fall in der definierten Lage mittels eines Befestigungsmittels, z.B. in Form einer Befestigungsschraube, am Gehäuse 2 fixiert. Vorzugsweise wird der Werkzeugträger 1 für den schwingungsfreien Betrieb in der oberen Totpunktlage gehalten, weil sich dann der Exzenter 30 in einer spielfreien oberen Totpunktlage befindet. Eine wichtige Funktion des Frequenzumrichters liegt überdies darin, dass dadurch die Schwingungsfrequenz der Elektrode geregelt werden kann und die Anlage zum einen synchron mit anderen Schwingungserzeugern betrieben werden kann und zum anderen mit einer vorgegebenen Frequenz betrieben werden kann, die außerhalb der Resonanzfrequenz zu bearbeitender schwingungsgefährdeter Bauteile, wie zum Beispiel BLISK-Schaufeln, liegt.

### Bezugszeichenliste

- 1: Werkzeugträger
- 2: Gehäuse
- 3: Schwingungsantriebsmechanismus
- 4: Erste Flüssigkeitskammer
- 5: Zweite Flüssigkeitskammer
- 6: Dritte Flüssigkeitskammer
- 7: Erste Einlassöffnung
- 8: Zweite Einlassöffnung
- 9: Dritte Einlassöffnung
- 10: Schauglas/Sensor
- 11: Schauglas/Sensor
- 12: Leitfähigkeitsmesssensor
- 13: Erste Querwand
- 14: Zweite Querwand
- 15: Dritte Querwand
- 16: Deckwand
- 17: Bodenwand
- 18: Erste Durchgangsöffnung
- 19: Zweite Durchgangsöffnung
- 20: Dritte Durchgangsöffnung
- 21: Vierte Durchgangsöffnung
- 22: Dichtung
- 23: Dichtung
- 24: Dichtung
- 25: Lagerbuchse
- 26: Lagerbuchse
- 27: Spiralnut
- 28: Spiralnut
- 29: Antriebsmotor
- 30: Exzenter
- 31: Erste Lagerplatte
- 32: Zweite (keilförmige) Lagerplatte
- 33: Schwinghebel
- 34: Dritte (ballige) Lagerplatte
- 35: Vierte (ballige, keilförmige) Lagerplatte
- 36: Traverse
- 37: Elastischer Bereich von 33
- 38: Masseausgleichselement
- 39: Zugstange
- 40: Druckfeder
- 41: Stellmutter
- 42: Piezoelektrische Messeinrichtung

## Patentansprüche

1. Vorrichtung zur präzisen elektrochemischen Bearbeitung von metallischen Werkstücken, die einen Werkzeugträger mit einer Elektrode, einen mit dem Werkzeugträger verbundenen Schwingungsantriebsmechanismus zur Erzeugung.einer Schwingbewegung der Elektrode in der Bearbeitungsrichtung und ein eine kontinuierliche Linearbewegung ausführendes Vorschubteil, in dem der Werkzeugträger angeordnet und durch Führungsmittel beweglich gehalten ist, aufweist, **dadurch gekennzeichnet, dass**
als Führungsmittel für die lineare Schwingbewegung des langgestreckten Werkzeugträgers (1) jeweils aus einer in einem als Vorschubteil dienenden Gehäuse (2) gebildeten Flüssigkeitskammer (4, 5) gekühlte und geschmierte Gleitlager (25, 26), die aus einem quellfähigen Material bestehen, vorgesehen sind; und
dass
der Schwingungsantriebsmechanismus (3) einen senkrecht zur Längsachse des Werkzeugträgers (1) angeordneten, das Gehäuse (2) durchgreifenden Schwinghebel (33) umfasst, der mit seiner - bezogen auf die Längsachse des Werkzeugträgers (1) - oberen und unteren Fläche beidseitig mit dem Werkzeugträger (1) in Eingriff steht und außerhalb des Gehäuses (2) an einem Ende fest eingespannt und am gegenüberliegenden Ende schwingend angetrieben ist.

2. Vorrichtung nach Anspruch 1, **dadurch gekennzeichnet, dass** der Werkzeugträger (1) langgestreckt ausgebildet und in mindestens zwei im Abstand voneinander angeordneten, als Gleitlager fungierenden ersten und zweiten Lagerbuchsen (25, 26) aus einem hygroskopischen Kunststoffmaterial gelagert ist, wobei der Schwinghebel (33) den Werkzeugträger (1) zwischen den Lagerbuchsen (25, 26) kontaktiert.

3. Vorrichtung nach Anspruch 2, **dadurch gekennzeichnet, dass** die Lagerbuchsen (25, 26) an der Innenumfangsfläche eine Spiralnut (27, 28) aufweisen, die von Wasser als Kühl-, Schmier- und Quellmittel durchströmt ist.

4. Vorrichtung nach Anspruch 3, **dadurch gekennzeichnet, dass** das Kühl-, Schmier- und Quellmittel destilliertes Wasser ist.

5. Vorrichtung nach Anspruch 1, **dadurch gekennzeichnet, dass** das Gehäuse (2) eine Deckwand (16) und eine Bodenwand (17) sowie erste bis dritte Querwände (13 bis 15) aufweist, wobei die Querwände und die Bodenwand mit Dichtungen (22 bis 24) ausgestattete Durchgangsöffnungen (18 bis 21) für den Werkzeugträger (1) aufweisen, und wobei die erste Flüssigkeitskammer (4) zwischen der Deckwand (16) und der ersten Querwand (13), in der die erste Lagerbuchse (25) angeordnet ist, ausgebildet ist, und die zweite Flüssigkeitskammer (5) zwischen der zweiten Querwand (14) und der dritten Querwand (15), in der die zweite Lagerbuchse (26) angeordnet ist, ausgebildet ist, und wobei sich der Schwinghebel (33) zwischen der ersten und der zweiten Querwand (13, 14) über Öffnungen in der Gehäuselängswand durch das Gehäuse (2) hindurch erstreckt.

6. Vorrichtung nach Anspruch 5, **dadurch gekennzeichnet, dass** in den Flüssigkeitskammern (5, 6) Einlassöffnungen (7, 8) und Füllstandsanzeiger (10, 11) vorgesehen sind.

7. Vorrichtung nach Anspruch 1, **dadurch gekennzeichnet, dass** im Abstand und im Wesentlichen parallel zum Schwinghebel (33) an dem Gehäuse (2) eine Traverse (36) befestigt ist, die auf einer Seite das fest eingespannte Ende des Schwinghebels (33) hält und die am anderen Ende über eine als Masseausgleichselement (38) fungierende, einstellbar federnd gehaltene Zugstange (39) mit dem antriebsseitigen Ende des Schwinghebels (33) verbunden ist.

8. Vorrichtung nach Anspruch 1, **dadurch gekennzeichnet, dass** der Schwinghebel (33) durch einen an der Gehäuselängswand angeflanschten Antriebsmotor (29) angetrieben ist und antriebsseitig zwischen einer ersten Lagerplatte (31) und einer keilförmigen zweiten Lagerplatte (32) an dem Exzenter (30) gehalten ist.

9. Vorrichtung nach Anspruch 8, **dadurch gekennzeichnet, dass** der Antriebsmotor (29) über einen Frequenzumrichter zur Regelung der Schwingungsfrequenz der Elektrode und zur Einstellung einer bestimmten Position der Elektrode für den Betrieb der Vorrichtung mit nicht schwingender Elektrode ansteuerbar ist.

10. Vorrichtung nach Anspruch 9, **dadurch gekennzeichnet, dass** zur Bestimmung der Position der mit dem Werkzeugträger (1) verbundenen Elektrode eine Messeinrichtung (42)vorgesehen ist.

11. Vorrichtung nach Anspruch 10, **dadurch gekennzeichnet, dass** die Messeinrichtung auf dem Prinzip der Piezoelektrizität misst und zwischen der Traverse (36) und dem Schwinghebel (33) angeordnet ist.

12. Vorrichtung nach Anspruch 9, **dadurch gekennzeichnet, dass** sich der Werkzeugträger (1) mit der an diesem befestigten Elektrode für die elektrochemische Bearbeitung mit nicht schwingender Elektrode in der oberen Totpunktlage, und zwar entsprechend der oberen Totpunktlage des Exzenters (30) des Antriebsmotors (29), befindet und in dieser Position durch ein Befestigungsmittel arretiert ist.

13. Vorrichtung nach Anspruch 1, **dadurch gekennzeichnet, dass** der Schwinghebel (33) den Werkzeughalter (1) zwischen einer dritten Lagerplatte (34) und einer keilförmigen vierten Lagerplatte (35), die zu der oberen und unteren Fläche des Schwinghebels (33) hin ballig ausgebildet sind, kontaktiert.

14. Vorrichtung nach Anspruch 1, **dadurch gekennzeichnet, dass** der Schwinghebel (33) nahe seinem Einspannende einen elastischen Bereich (37) aufweist, der durch eine gewölbte Materialschwächung gebildet ist.

15. Vorrichtung nach Anspruch 5, **dadurch gekennzeichnet, dass** in dem Gehäuse (2) zwischen der dritten Querwand (15) und der Bodenwand (17), durch die hindurch der Werkzeugträger (1) in den für die elektrochemische Bearbeitung erforderlichen Elektrolyten ragt, eine dritte Flüssigkeitskammer (6) gebildet ist, die eine Einlassöffnung (9) zur Befüllung mit Wasser und einen Leitfähigkeitsmesssensor (12) zum Nachweis von in das Gehäuse (2) eingetretenem Elektrolyten aufweist.

## Claims

1. Apparatus for electrochemical precision machining of metallic workpieces which includes a tool holder with an electrode, an oscillating drive mechanism connected to the tool holder to generate an oscillatory motion of the electrode in the machining direction and a continuously linearly moving feed unit in which the tool holder is arranged and moveably supported by guiding means,
**characterized in that**,
as guiding means for the linear oscillatory motion of the long tool holder (1), cooled and lubricated bearing bushes (25, 26) made of a swelling material are provided in a casing (2) acting as feed unit and formed by a liquid chamber (4, 5), and **in that**
the oscillating drive mechanism (3) includes a rocker (33), arranged vertically to the longitudinal axis of the tool holder (1) and extending through the casing (2), whose upper and lower surface, as related to the longitudinal axis of the tool holder (1), bilaterally mate with the tool holder (1) and whose one end is firmly clamped, while the opposite end is driven in oscillatory motion outside the casing (2).

2. Apparatus in accordance with Claim 1, **characterized in that** the tool holder (1) is given a long shape and is supported in at least two first and second bearing bushes (25, 26) acting as plain bearings which are arranged at a certain distance from each other and are made of hygroscopic plastic material, with the rocker (33) mating with the tool holder (1) between the bearing bushes (25, 26).

3. Apparatus in accordance with Claim 2, **characterized in that** the bearing bushes (25, 26) feature a spiral groove (27, 28) on the inner circumferential surface, which is flown by water acting as cooling, lubricating and swelling liquid.

4. Apparatus in accordance with Claim 3, **characterized in that** the cooling, lubricating and swelling liquid is distilled water.

5. Apparatus in accordance with Claim 1, **characterized in that** the casing (2) has a top wall (16) and a bottom wall (17) as well as first to third partitions (13 to 15), with the partitions and the bottom wall featuring passages (18 to 21) for the tool holder (1) that are fitted with seals (22 to 24), and with the first liquid chamber (4) being arranged between the top wall (16) and the first partition (13) provided with the first bearing bush (25), and with the second liquid chamber (5) being situated between the second partition (14) and the third partition (15) provided with the second bearing bush (26), and with the rocker (33) extending through the casing (2) via openings in the casing longitudinal wall between the first and the second partition (13, 14).

6. Apparatus in accordance with Claim 5, **characterized in that** inlet ports (7, 8) and level indicators (10, 11) are provided in the liquid chambers (5, 6).

7. Apparatus in accordance with Claim 1, **characterized in that**, at a certain distance from and essentially parallelly to the rocker (33), a brace (36) is attached to the casing (2), this brace (36) holding, on the one side, the firmly clamped end of the rocker (33) and, on the other side, being connected to the drive-side end of the rocker (33) via an adjustable, spring-retained tie rod (39) acting as mass compensation element (38).

8. Apparatus in accordance with Claim 1, **characterized in that** the rocker (33) is driven by a drive motor (29) flanged to the longitudinal wall of the casing and is located, on the drive side, at the eccentric (30) between a first bearing plate (31) and a wedge-shaped second bearing plate (32).

9. Apparatus in accordance with Claim 8, **characterized in that** the drive motor (29) is actuatable via a frequency converter to control the oscillation frequency of the electrode and to set a specific position of the electrode for the operation of the apparatus with non-oscillating electrode.

10. Apparatus in accordance with Claim 9, **characterized in that** a measuring device (42) is provided to determine the position of the electrode connected to the tool holder (1).

11. Apparatus in accordance with Claim 10, **characterized in that** the measuring device works according to the principle of piezoelectricity and is arranged between the brace (36) and the rocker (33).

12. Apparatus in accordance with Claim 9, **characterized in that** the tool holder (1) with the electrode attached to it is in the upper dead center position, actually corresponding to the upper dead center position of the eccentric (30) of the drive motor (29), and is locked in this position by a fastener when the apparatus is operated in the non-oscillating electrode mode for electrochemical machining.

13. Apparatus in accordance with Claim 1, **characterized in that** the rocker (33) mates with the tool holder (1) between a third bearing plate (34) and a wedge-shaped fourth bearing plate (35), with these bearing plates being crowned towards the upper and the lower surface of the rocker (33).

14. Apparatus in accordance with Claim 1, **characterized in that** the rocker (33) features a resilient section (37) in the form of a curved material recession near its clamped end.

15. Apparatus in accordance with Claim 5, **characterized in that** a third liquid chamber (6) is provided in the casing (2) between the third partition (15) and the bottom wall (17) through which the tool holder (1) protrudes into the electrolyte required for electrochemical machining, this third liquid chamber (6) being provided with an inlet port (9) for filling with water and with a conductivity measuring sensor (12) to detect any ingress of electrolyte into the casing (2).

## Revendications

1. Dispositif pour l'usinage électrochimique de précision de pièces d'oeuvre métalliques, présentant un porte-outil avec une électrode, un mécanisme d'entraînement vibratoire relié au porte-outil et destiné à générer un mouvement vibratoire de l'électrode dans le sens de l'usinage, et un organe d'avance décrivant un mouvement linéaire continu, dans lequel le porte-outil est disposé et maintenu de manière mobile par des éléments de guidage, **caractérisé en ce que**
comme éléments de guidage pour le mouvement vibratoire linéaire du porte-outil allongé (1) sont respectivement prévus des paliers lisses (25, 26) refroidis et lubrifiés, constitués d'un matériau apte au gonflement, dans un carter (2) servant d'organe d'avance et formé d'une chambre de liquide (4, 5), et que
le mécanisme d'entraînement vibratoire (3) comprend un levier oscillant (33) disposé perpendiculairement à l'axe longitudinal du porte-outil (1) et traversant le carter (2), et qui est en prise des deux côtés avec le porte-outil (1) par ses faces supérieure et inférieure - par rapport à l'axe longitudinal du porte-outil (1) -, et hors du carter (2) est fixé fermement à une extrémité, et est entraîné de manière oscillante à l'extrémité opposée.

2. Dispositif selon la revendication n° 1, **caractérisé en ce que** le porte-outil (1) a une forme allongée et est logé dans au moins un premier et un deuxième coussinets (25, 26) distants l'un de l'autre, faisant fonction de paliers lisses et constitués d'un matériau synthétique hygroscopique, sachant que le levier oscillant (33) entre en contact avec le porte-outil (1) entre les coussinets (25, 26).

3. Dispositif selon la revendication n° 2, **caractérisé en ce que** les coussinets (25, 26) présentent sur leur surface circonférentielle intérieure une rainure hélicoïdale (27, 28) traversée par de l'eau comme agent réfrigérant, lubrifiant et gonflant.

4. Dispositif selon la revendication n° 3, **caractérisé en ce que** l'agent réfrigérant, lubrifiant et gonflant est de l'eau distillée.

5. Dispositif selon la revendication n° 1, **caractérisé en ce que** le carter (2) présente une paroi supérieure (16) et une paroi inférieure (17) ainsi que des première à troisième parois transversales (13 à 15), sachant que les parois transversales et la paroi inférieure présentent des orifices de passage (18 à 21) pour le porte-outil (1) équipés de joints d'étanchéité (22 à 24), et que la première chambre de liquide (4) est formée entre la paroi supérieure (16) et la première paroi transversale (13) dans laquelle est disposé le premier coussinet (25), que la deuxième chambre de liquide (5) est formée entre la deuxième paroi transversale (14) et la troisième paroi transversale (15) dans laquelle est disposé le deuxième coussinet (26), et que le levier oscillant (33) s'étend entre la première et la deuxième parois transversales (13, 14) en traversant le carter (2) par des orifices pratiqués dans la paroi longitudinale du carter.

6. Dispositif selon la revendication n° 5, **caractérisé en ce que** des orifices d'admission (7, 8) et des indicateurs de niveau (10, 11) sont prévus dans les chambres de liquide (5, 6).

7. Dispositif selon la revendication n° 1, **caractérisé en ce que** sur le carter (2) est fixée à une certaine distance du levier oscillant (33), et pour l'essentiel parallèlement à celui-ci, une traverse (36) qui maintient d'un côté l'extrémité fermement fixée du levier oscillant (33), et est reliée à son autre extrémité à l'extrémité entraînée du levier oscillant (33) par l'intermédiaire d'une bielle de traction (39) réglable et maintenu par ressort, et qui fait fonction d'élément d'équilibrage des masses (38).

8. Dispositif selon la revendication n° 1, **caractérisé en ce que** le levier oscillant (33) est entraîné par un moteur d'entraînement (29) bridé à la paroi longitudinale du carter, et du côté de l'entraînement, est maintenu sur l'excentrique (30) par une première plaque d'appui (31) et une seconde plaque d'appui cunéiforme (32).

9. Dispositif selon la revendication n° 8, **caractérisé en ce que** le moteur d'entraînement (29) peut être excité par un convertisseur de fréquence pour réguler la fréquence des oscillations de l'électrode et pour régler une certaine position de l'électrode pour le fonctionnement du dispositif avec une électrode non oscillante.

10. Dispositif selon la revendication n° 9, **caractérisé en ce que** qu'un dispositif de mesure (42) est prévu pour déterminer la position de l'électrode reliée au porte-outil (1).

11. Dispositif selon la revendication n° 10, **caractérisé en ce que** le dispositif de mesure mesure selon le principe de la piézo-électricité et est placé entre la traverse (36) et le levier oscillant (33).

12. Dispositif selon la revendication n° 9, **caractérisé en ce que** pour l'usinage électrochimique avec une électrode non oscillante, le porte-outil (1) avec l'électrode fixée à celui-ci se trouve au point mort haut correspondant au point mort haut de l'excentrique (30) du moteur d'entraînement (29), et est bloqué dans cette position par un moyen de fixation.

13. Dispositif selon la revendication n° 1, **caractérisé en ce que** le levier oscillant (33) entre en contact avec le porte-outil (1) entre une troisième plaque d'appui (34) et une quatrième plaque d'appui cunéiforme (35) formées de manière convexe en direction des faces supérieure et inférieure du levier oscillant (33).

14. Dispositif selon la revendication n°1, **caractérisé en ce que** le levier oscillant (33) présente à proximité de son extrémité fixe une zone élastique (37) formée par un rétrécissement de matière concave.

15. Dispositif selon la revendication n°5, **caractérisé en ce que** dans le carter (2), entre la troisième paroi transversale (15) et la paroi inférieure (17), à travers lesquelles le porte-outil (1) passe dans l'électrolyte nécessaire à l'usinage électrochimique, est formée une troisième chambre de liquide (6) qui présente un orifice d'admission (9) pour le remplissage avec de l'eau et un capteur de mesure de conductibilité (12) pour déceler l'électrolyte entré dans le carter (2).
